# EUROPÄISCHE PATENTSCHRIFT

(11) **EP 0 381 924 B1**
(45) Veröffentlichungstag und Bekanntmachung des Hinweises auf die Patenterteilung: **05.04.1995**
(21) Anmeldenummer: 90100181.8
(22) Anmeldetag: 05.01.1990
(51) Int. Cl.: B23D 77/02

(54) **Reibahle**
Reamer
Alésoir

(30) Priorität: 08.02.1989 DE 3903655
(43) Veröffentlichungstag der Anmeldung: 16.08.1990
(73) Patentinhaber: MAPAL Fabrik für Präzisionswerkzeuge Dr. Kress KG, D-73405 Aalen (DE)
(72) Erfinder:
(74) Vertreter: Gleiss, Alf-Olav, Dr.jur. Dipl.-Ing.

(56) Entgegenhaltungen:
- CH-B- 546 614
- DE-C- 3 406 035
- FR-A- 2 485 970

## Beschreibung

Die Erfindung betrifft eine Reibahle mit mindestens einer Messerplatte gemäß Oberbegriff des Anspruchs 1.

Messerplatten von Reibahlen sind aus einem sehr harten aber auch spröden Material. Es ist daher überaus wichtig, die Klemmpratze gegenüber einer Messerplatte so auszurichten, daß beim Festspannen der Messerplatte keine punktförmigen Belastungen auftreten, durch die die Messerplatte zerstört werden könnte. Insbesondere bei der Feinbearbeitung von Bohrungswänden kommt es außerdem auf eine sehr exakte Ausrichtung der Messerplatte an. Dazu muß die Lage der Klemmpratze gegenüber der Messerplatte sehr genau eingehalten werden.

Bei einer bekannten Reibahle (DE-PS 34 06 035) findet eine Ausrichtung der Klemmpratze gegenüber der Messerplatte dadurch statt, daß die Klemmpratze mit zwei voneinander abgesetzten Bereichen versehen ist, wobei einer der Verschwenkung der Klemmpratze während des Festspannens entgegenwirkt, während der andere die Spannschraube aufnimmt.

Diese Reibahle hat den Nachteil, daß die Genauigkeit der Ausrichtung für zahlreiche Anwendungsfälle, in denen eine Präzisionsbearbeitung von Bohrungswänden erstrebt wird, nicht ausreicht. Überdies ist die Klemmpratze durch die zwei getrennten Bereiche relativ groß, so daß der Körper der Reibahle durch die die Klemmpratze aufnehmende Ausnehmung geschwächt wird, was besonders bei der Bearbeitung von Bohrungen mit sehr kleinen Durchmessern, also bei kleinen Reibahlen, ins Gewicht fällt.

Aus der FR-A-2 485 970 ist eine Reibahle bekannt, bei der ein als Wendeplatte ausgebildetes Schneidmesser mittels einer Spannpratze festklemmbar ist. Die Spannpratze wird mittels einer Spannschraube gegen ein getrenntes Gegenfutter geführt und verschwenkt um eine Formschlußvorrichtung zwischen Spannpratze und Gegenfutter in radialer Richtung der Reibahle gegen die Messerplatte und klemmt diese dadurch fest. Um ein radiales Verschwenken der Messerplatte während des Festspannens der Klemmpratze durch eine von dieser ausgehenden Verschwenkkraft zu vermeiden, sind zusätzliche Halteelemente in Form von Druckstiften vorgesehen. Bei dieser Reibahle ist nachteilig, daß die Klemmpratze lediglich zum axialen Festspannen einer Messerplatte geeignet ist, während für das radiale Ausrichten der Messerplatte zusätzliche Mittel notwendig sind. Diese bekannte Reibahle ist somit nur sehr aufwendig herzustellen, da zusätzliche Elemente eingebracht werden müssen.

Es ist daher Aufgabe der Erfindung, eine Reibahle mit mindestens einer Messerplatte zu schaffen, bei der eine optimale Einspannung und Ausrichtung der Messerplatte ohne eine Schwächung des Grundkörpers der Reibahle möglich ist.

Diese Aufgabe wird bei einer Reibahle der eingangs genannten Art mit Hilfe der in Anspruch 1 genannten Merkmale gelöst.

Durch die spezielle Ausbildung der Klemmpratze als Dreieck ist es möglich, die Seitenflächen der Klemmpratze als Führungsflächen zu nutzen, die von der Ecke ausgehen, in der die Spannschraube der Klemmpratze angeordnet ist. Dadurch ist bei sehr kleinem Aufbau eine äußerst exakte Ausrichtung der Klemmpratze möglich. Die beiden Schenkel bzw. Seitenflächen der Klemmpratze wirken mit entsprechenden Anlage- bzw. Anschlagflächen zusammen, die in einer Ausnehmung im Grundkörper der Reibahle vorgesehen sind, in der die Klemmpratze untergebracht ist.

Bei der speziellen Ausbildung der Reibahle gemäß Anspruch 1 gehen ferner die Seitenflächen der Klemmpratze in einen kreisbogenförmig ausgebildeten Wandbereich über. Aufgrund dieser Abrundung kann die Klemmpratze einer durch die als Führungsflächen dienenden Seitenwände hervorgerufenen Schwenkbewegung besonders gut folgen, so daß eine überaus exakte Ausrichtung der Klemmpratze gewährleistet ist.

Eine weitere Ausführungsform der Reibahle wird deshalb besonders bevorzugt, weil die die Messerplatte festspannende Klemmpratze auf ihrer Unterseite im wesentlichen als Ebene ausgebildet ist. Bei einer derartigen Ausbildung der Klemmpratze ist die die Klemmpratze aufnehmende Ausnehmung im Grundkörper der Reibahle besonders flach. Das heißt, eine Schwächung der Reibahle wird auf ein Minimum begrenzt.

Schließlich wird eine Ausführungsform der Reibahle besonders bevorzugt, bei der das im Körper der Klemmpratze vorgesehene, der Aufnahme einer Spannschraube dienende Gewinde sich in einem zylindrischen Zapfen fortsetzt, der konzentrisch zur Öffnung für die Spannschraube angeordnet und mit einem Innengewinde versehen ist. Er entspringt auf der Unterseite der Klemmpratze. Durch die Verlängerung des Gewindes können besonders hohe Spannkräfte aufgenommen werden, so daß die exakte Ausrichtung der von der Klemmpratze gehaltenen Messerplatte optimal eingehalten wird. Der Durchmesser der im Grundkörper der Reibahle vorgesehenen Bohrung für den zylindrischen Zapfen der Klemmpratze ist etwas größer als der Durchmesser dieses Zapfens. Dadurch ist eine Beeinträchtigung der durch die Seitenflächen der Spann- bzw. Klemmpratze erzeugten Ausrichtung ausgeschlossen.

Weitere Ausgestaltungen und Vorteile der Reibahle ergeben sich aus den Unteransprüchen.

Die erfindungsgemäße Reibahle wird im folgenden anhand der Zeichnung näher erläutert. Es zeigen
Figur 1 eine Seitenansicht des vorderen Teils einer Reibahle mit einer von einer Klemmpratze gehaltenen Messerplatte;
Figur 2 einen Querschnitt durch die Reibahle entlang der Linie II-II;
Figur 3 eine Draufsicht auf die Oberseite einer Klemmpratze;
Figur 4 eine Seitenansicht einer Klemmpratze und
Figur 5 einen Schnitt entlang der Linie V-V in Figur 3.

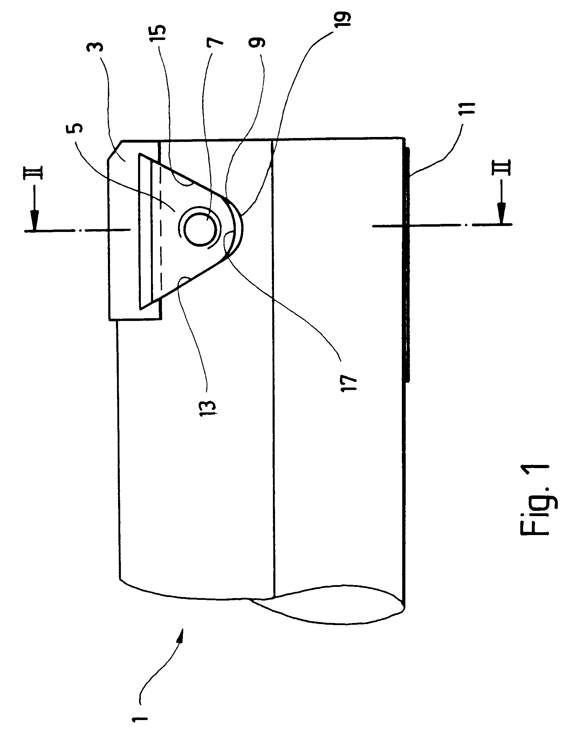

Figur 1 zeigt das Vorderteil bzw. den Kopf einer Reibahle 1 in Seitenansicht. Eine Messerplatte 3 wird von einer Spann- bzw. Klemmpratze 5 gehalten. Dabei wird die Klemmpratze von einer Spannschraube 7 im Grundkörper der Reibahle 1 festgespannt.

Die Reibahle 1 ist mit einer Ausnehmung 9 versehen, deren Konturen in etwa denen der Klemmpratze 5 entsprechen, so daß die Klemmpratze in der Ausnehmung zu liegen kommt.

Gegenüber der Messerplatte 3 ist am Umfang der Reibahle 1 eine erste Führungsleiste 11 vorgesehen.

In Figur 1 ist die Klemmpratze 5 in Draufsicht dargestellt. Es ist ersichtlich, daß sie im wesentlichen dreieckförmig ausgebildet ist, wobei die Spannschraube 7 in einer Ecke des Dreiecks angeordnet ist. Die dieser Ecke gegenüberliegende Seite bzw. Kante der Klemmpratze 5 liegt auf der Messerplatte 3 auf.

Die Seitenflächen der Klemmpratze 5, die von der Ecke ausgehen, an der die Spannschraube 7 vorgesehen ist, sind als Führungsflächen 13 und 15 ausgebildet, die mit den Begrenzungsflächen der Ausnehmung 9 im Grundkörper der Reibahle 1 zusammenwirken. Die Wände der Ausnehmung 9 dienen hier als Anlageflächen für die Führungsflächen 13 und 15.

Die Führungsflächen 13 und 15 gehen im Bereich der Ecke der Klemmpratze 5, in der die Spannschraube 7 vorgesehen ist, in einen kreisbogenförmig ausgebildeten Wandbereich 17 über. Die Begrenzungswände der Ausnehmung 9, die als Anlage- bzw. Anschlagflächen für die Führungsflächen 13 und 15 dienen, gehen ebenfalls in einen kreisbogenförmig ausgebildeten Wandbereich 19 über.

Aus der Darstellung ist ersichtlich, daß die Klemmpratze 5 bei der Befestigung in der Reibahle 1 mit ihren Führungsflächen 13 und 15 an den entsprechenden Begrenzungswänden der Ausnehmung 9, die als Anschlagflächen dienen, anliegt. Durch das Zusammenspiel dieser Flächen findet eine sehr exakte Ausrichtung der Klemmpratze im Körper der Reibahle 1 statt. Durch die Größe der Führungsflächen 13 und 15 ist sichergestellt, daß auch bei hohen Spannkräften die Ausrichtung der Klemmpratze aufrechterhalten wird. Durch die exakte Justierung der Klemmpratze 5 ist auch eine sehr genaue Halterung bzw. Einspannung der Messerplatte 3 gewährleistet. Dies ist besonders bei der Feinbearbeitung von Bohrungen, bei der eine hohe Oberflächengüte und eine exakte Maßhaltigkeit erreicht werden soll, von wesentlicher Bedeutung.

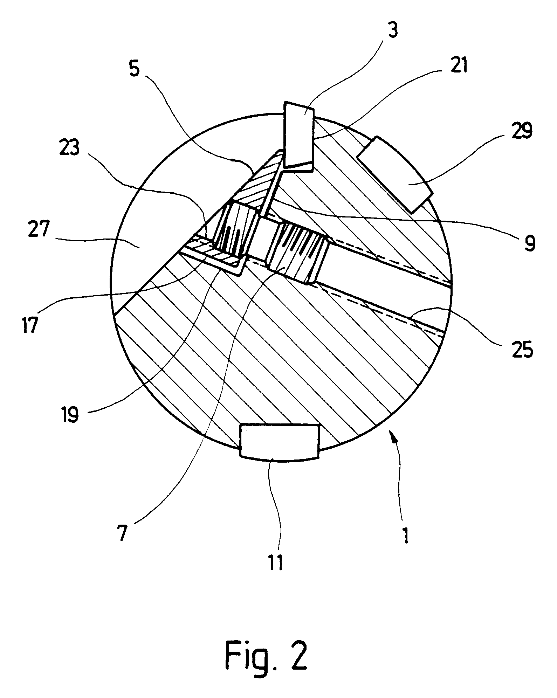

Die Führungsflächen 13 und 15 dienen auch als Widerlager und als Aufnahmeflächen für die beim Einspannen der Klemmpratze 5 auftretenden Kräfte. Darauf wird unten anhand der Erläuterungen zu Figur 2 noch genauer eingegangen.

Die Führungsflächen 13 und 15 der Klemmpratze 5 schließen bei dem dargestellten Ausführungsbeispiel einen Winkel von ca. 60° ein. Durch diesen großen Öffnungswinkel ergibt sich eine große Breite der auf die Messerplatte 3 wirkenden Klemmfläche. Durch eine Änderung des Öffnungswinkels kann die Klemmpratze an verschiedene Messerplatten-Größen bzw. -Längen angepaßt werden.

Durch die Breite der Klemmfläche wird eine optimale Verteilung der Spannkräfte sichergestellt und eine punktförmige Belastung der Messerplatte, die zu einer Beschädigung führen könnte, vermieden. Gleichzeitig ergibt sich die erwähnte sehr exakte Einspannung auch bei relativ langen Messerplatten.

Schließlich kann aufgrund der großen Breite der Klemmpratze die Messerplatte auch im Bereich des Anschnitts praktisch völlig überdeckt werden. Dadurch lassen sich nicht nur eine optimale Klemmung sondern auch ein besonders guter Spanfluß erzielen. Letzeres deshalb, weil im Bereich des Spanablaufs keine Kanten existieren, an denen sich Späne stauen könnten. Da die Späne praktisch alle auf der Klemmpratze ablaufen, wird dabei der Grundkörper der Reibahle optimal gegen Verschleiß geschützt.

Figur 2 zeigt einen Schnitt durch die Reibahle 1 gemäß Figur 1 entlang der Linie II-II. Gleiche Teile sind mit gleichen Bezugszeichen versehen, so daß auf ihre ausführliche Beschreibung verzichtet werden kann.

Die Messerplatte 3 ist in einer geeigneten Ausnehmung 21 im Grundkörper der Reibahle 1 angeordnet.

Auf die Vorderseite der Messerplatte 3, das heißt, auf die Messerbrust, drückt die der Spannschraube 7 gegenüberliegende Kante der Klemmpratze 5. Durch diese Spannkraft wird die Messerplatte 3 mit ihrer Rückseite gegen eine Schulter der Ausnehmung 21 gepreßt und gehalten. Wenn die Messerplatte 3 als Wechselplatte ausgebildet ist, kann die in der Ausnehmung 21 vorgesehene Aufnahmefläche für die Schneiden der Messerplatte an deren Kontur angepaßt werden, so daß eine Beschädigung der Schneiden ausgeschlossen ist.

Aus der Schnittdarstellung ist erkennbar, daß die Ausnehmung 9 im Grundkörper der Reibahle 1 an die Kontur der Messerplatte angepaßt ist. Das heißt, die Tiefe der Ausnehmung ist im Bereich der Spannschraube 7 größer als im Bereich der Vorderseite der Klemmpratze 5, die der Messerplatte 3 zugewandt ist. Die Klemmpratze 5 ist gänzlich im Grundkörper der Reibahle versenkt, so daß die Oberfläche der Klemmpratze mit der angrenzenden, den Spanraum 27 begrenzenden Oberfläche der Reibahle fluchtet.

Die Spannschraube 7 ist in eine mit einem Innengewinde versehene Öffnung 23 in der Klemmpratze 5 eingeschraubt. In den Grundkörper der Reibahle 1 ist eine Durchgangsbohrung 25 mit einem Innengewinde eingebracht, die konzentrisch zur Öffnung 23 in der Messerplatte 5 verläuft. Die Spannschraube 7 ist hier mit zwei gegenläufigen Gewindebereichen versehen, von denen einer mit dem Innengewinde in der Bohrung 25 und einer mit dem in der Öffnung 23 vorgesehenen Innengewinde kämmt.

Der kreisbogenförmig ausgebildete Wandbereich 17 der Klemmpratze 5, der der Messerplatte 3 gegenüberliegt, weist einen größeren Krümmungsradius auf als der kreisbogenförmig ausgebildete Wandbereich 19 der Ausnehmung 9 im Grundkörper der Reibahle 1. In diesem Bereich berührt die Klemmpratze 5 die Ausnehmung 9 nicht. Dadurch wird die durch die Führungsflächen 13 und 15 bewirkte Ausrichtung und Justierung der Klemmpratze also durch diesen Bereich nicht beeinträchtigt. Außerdem ist sichergestellt, daß die bei der Einspannung der Klemmpratze auftretenden Kräfte ausschließlich über die Führungsflächen 13 und 15 in den Grundkörper der Reibahle 1 abgeleitet bzw. übertragen werden.

Die Dicke der Klemmpratze 5 nimmt, von der Ecke ausgesehen, in der die Spannschraube 7 angeordnet ist, in Richtung auf die auf der Messerplatte 3 aufliegende Kante der Klemmpratze ab. Es ergibt sich also ein im wesentlichen dreieckförmiger Querschnitt der Klemmpratze 5. Durch diese Ausbildung der Klemmpratze können die bei der Bearbeitung einer Bohrungswand entstehenden Späne ungehindert in den Spanraum 27 abfließen.

Bei der Bearbeitung einer Bohrung stützt sich die Reibahle 1 nicht nur auf der der Messerplatte 3 gegenüber angeordneten ersten Führungsleiste 11 ab, sondern auch auf einer der Messerplatte, in Drehrichtung gesehen, nachgeordneten zweiten Führungsleiste 29. Die Drehrichtung der Reibahle ist durch einen Pfeil angedeutet.

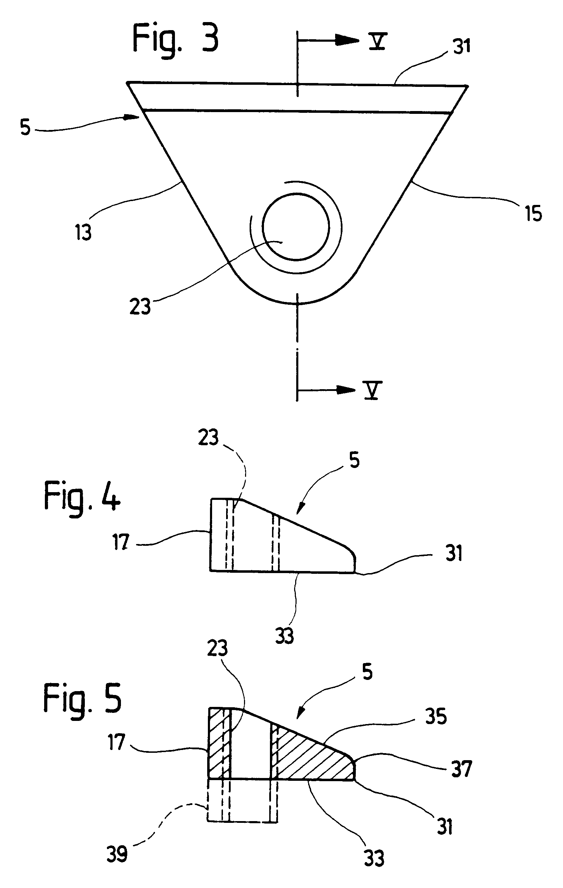

Aus Gründen der besseren Anschaulichkeit ist die Klemmpratze 5 in den Figuren 3 bis 5 noch einmal vergrößert dargestellt. Gleiche Teile sind mit gleichen Bezugszeichen versehen.

Aus der Darstellung in Figur 3 ist die im wesentlichen dreieckförmige Ausbildung der Klemmpratze 5 deutlich erkennbar. In einer Ecke des Dreiecks ist die Öffnung 23 mit einem Innengewinde erkennbar, in das die Spannschraube 7 eingreifen kann. Die der Öffnung 23 gegenüberliegende Kante 31 der Klemmpratze 5 liegt auf der festzuhaltenden Messerplatte 3 auf. Die von dieser Kante 31 ausgehenden Seitenflächen dienen als Führungsflächen 13 und 15. Sie wirken mit den entsprechenden Anlageflächen der Ausnehmung 9 im Grundkörper der Reibahle 1 so zusammen, daß beim Festspannen der Klemmpratze eine sehr exakte Ausrichtung im Körper der Reibahle 1 erfolgt.

Weder bei der Bearbeitung von Bohrungswänden noch bei der radialen Einstellung der Messerplatte 3 erfolgt eine Lageänderung der Klemmpratze 5. Durch die exakte Justierung der Klemmpratze ist auch eine sehr genaue radiale Einstellung der Messerplatte 3 möglich, so daß sich eine optimale Ausrichtung der Messerplatte in dem Kopf der Reibahle 1 ergibt. Die der radialen Einstellung der Messerplatte dienenden Stellorgane sind bekannt und daher hier nicht dargestellt.

In Figur 3 ist gestrichelt eingezeichnet, daß die Klemmpratze 5 auch asymmetrisch ausgebildet werden kann. Durch eine Änderung des Öffnungswinkels der Seitenwände der Klemmpratze kann die Messerplatte 3 von der Kante 31 der Klemmpratze praktisch gänzlich überspannt werden. Besonders im Bereich des Anschnitts, also -in Vorschubrichtung gesehen- im vorderen Bereich der Messerplatte, kann eine optimale Klemmung erreicht werden. Außerdem ist der Verschleiß des Grundköpers der Reibahle minimal, weil die Späne immer auf der Klemmpratze ablaufen. Dabei treten im Bereich des Spanablaufs keine Kanten auf, so daß Spanstaus auf ein Minimum reduziert werden.

Aus der Seitenansicht der Figur 4 ergibt sich auch, daß die Dicke der Klemmpratze 5 von der Ecke ausgesehen, in der die Öffnung 23 vorgesehen ist, in Richtung auf die Kante 31 abnimmt. Es ergibt sich also ein im wesentlichen dreieckförmiger Querschnitt der Klemmpratze. Wie sich aus Figur 2 ergibt, stimmt die Form der Klemmpratze 5 mit der der Ausnehmung 9 im Körper der Reibahle 1 überein, so daß die Klemmpratze im montierten Zustand praktisch ganz in der Reibahle versenkt ist.

Die Länge des Innengewindes in der Öffnung 23 entspricht im Bereich der kreisbogenförmig ausgebildeten Wandung 17 der Dicke der Klemmpratze 5. In diesem Bereich ergibt sich also eine sehr hohe Festigkeit, so daß also starke Spannkräfte aufgebracht werden können.

Dadurch, daß die Unterseite 33 der Klemmpratze 5 als Ebene ausgebildet ist, ergibt sich eine exakte Anlage an der Spannfläche der Messerplatte 3 bzw. an der Messerbrust. Die als Führungsflächen 13 und 15 dienenden Seitenflächen der Klemmpratze stehen, ebenso wie die Mittelachse der Öffnung 23, hier senkrecht auf der Unterseite 33.

Im folgenden soll noch einmal erläutert werden, wie die Spannkräfte von der Klemmpratze 5 auf die Messerplatte 3 übertragen bzw. die Reibahle 1 abgeleitet werden.

Die Klemmpratze 5 liegt mit der Kante 31 auf der Messerplatte 3 auf. Wenn die Spannschraube 7 angezogen wird, drückt die Klemmpratze auf die Messerbrust, so daß die Messerplatte 3 gegen die Rückwand der Ausnehmung 21 im Grundkörper der Reibahle 1 gepreßt wird.

Beim Anziehen der Spannschraube 7 versucht die Klemmpratze 5 eine Schwenkbewegung auszuführen, wobei die Schwenkachse dieser Bewegung mit der Berührungslinie zwischen der Klemmpratze und der Messerplatte zusammenfällt. Durch diese Schwenkbewegung legen sich die als Führungsflächen 13 und 15 dienenden Seitenflächen der Klemmpratze an die zugehörigen als Anlageflächen dienenden Begrenzungswände der Ausnehmung 9. Dadurch findet eine Ausrichtung der Klemmpratze statt. Ziel der Ausrichtung ist es, die Kante 31 der Klemmpratze möglichst parallel zur Nebenschneide der Messerplatte 3 auszurichten. Die Nebenschneide ist die Schneide der Messerplatte, die entgegen der durch einen Pfeil in Figur 1 angedeuteten Vorschubrichtung der Reibahle 1 geneigt ist. Die Neigung ist allerdings mit 1»m auf 1mm so gering, daß sie in der Darstellung gemäß Figur 1 nicht zu erkennen ist.

Dadurch, daß die dreieckförmige Klemmpratze beim Festziehen der Spannschraube 7 in die ebenfalls als Dreieck ausgebildete Ausnehmung 9 der Reibahle 1 gepreßt wird, werden die Spannkräfte über die Führungsflächen 13 und 15 in die als Widerlager dienenden Begrenzungswände der Ausnehmung 9 abgeleitet. Die Spannkräfte werden dabei praktisch senkrecht in die Begrenzungswände eingeleitet, die sich im wesentlichen parallel zur Oberfläche des Spanraums verformen. Durch die verschiedenen Krümmungsradien der kreisbogenförmigen Wandbereiche 17 und 19 der Klemmpratze bzw. der Ausnehmung findet hier keine Kraftübertragung statt, weil hier keine Berührung zwischen der Klemmpratze und der Ausnehmung 9 vorliegt. In den Figuren 1 und 2 ist in diesem Bereich eindeutig ein Spalt erkennbar. Bei herkömmlichen Reibahlen erfolgt gerade in dem rückwärtigen Bereich der Klemmpratze eine Abstützung zur Aufnahme der Spannkräfte. Insbesondere bei Reibahlen mit sehr kleinem Durchmesser trat daher aufgrund der Spannkräfte häufig eine Verformung des Reibahlenkörpers auf. Aus Figur 2 ist ersichtlich, daß diese Verformung besonders im Bereich zwischen der Rückseite der Klemmpratze und der Umfangslinie der Reibahle eintrat.

Figur 5 zeigt einen Schnitt durch die Klemmpratze 5 entlang der Linie V-V, die in Figur 3 eingezeichnet ist.

Aus dieser Darstellung ergibt sich noch einmal, daß die Unterseite 33 der Klemmpratze eben ist, und daß die Oberseite 35 gegenüber dieser Ebene geneigt ist, wobei ein Winkel von ca. 5° bis etwa 60° eingeschlossen wird. Bevorzugt wird ein Winkel von annähernd 20°. Dadurch ergibt sich ein dreieckförmiger Querschnitt der Klemmpratze 5. Durch die Höhe des kreisbogenförmig ausgebildeten Wandbereichs 17 können hohe Spannkräfte über das Innengewinde der Öffnung 23 aufgenommen werden. Im Bereich der auf der Messerplatte 3 aufliegenden Kante 31 ist eine Fase 37 vorgesehen.

In der Schnittdarstellung ist ein zylindrischer Ansatz 39 angedeutet, der konzentrisch zur Öffnung 23 verläuft, auf der Unterseite 33 der Klemmpratze 5 entspringt und mit einem Innengewinde versehen ist. Dadurch kann eine Verlängerung des Gewindes für die Spannschraube 7 erreicht werden, so daß die Spannkräfte noch weiter erhöht werden können. Der Außendurchmesser des zylindrischen Ansatzes 39 ist kleiner als der Innendurchmesser der im Grundkörper der Reibahle 1 vorzusehenden Bohrung, die der Aufnahme des zylindrischen Ansatzes dient. Dadurch wird eine Beeinträchtigung der Ausrichtung der Klemmpratze, die durch die Führungsflächen 13 und 15 bewirkt wird, ausgeschlossen.

Die optimale Ausrichtung der Klemmpratze wird dadurch unterstützt, daß die Führungsflächen 13 und 15 sehr groß sind. Sie erstrecken sich über die gesamte Höhe der Klemmpratze und reichen praktisch über die gesamte Kantenlänge der Klemmpratze. Durch diese großen Führungsflächen ergeben sich trotz der insgesamt geringen Größe der Klemmpratze auch sehr große Führungskräfte, die die Klemmpratze in der gewünschten Lage erhalten. Durch den Öffnungswinkel von beispielsweise 60° der von der Kante 31 ausgehenden Führungsflächen 13 und 15 ergibt sich eine große Länge der Kante 31 und damit eine große Auflagefläche auf der Messerplatte 3. Dadurch werden auch sehr lange Messerplatten von dieser Klemmpratze sicher und exakt gehalten.

Es ist ohne weiteres möglich, bei sehr langen Messerplatten mindestens zwei Klemmpratzen der oben beschriebenen Art vorzusehen.

Dadurch, daß die Unterseite 33 der Klemmpratze 5 gemäß Figur 4 als Ebene ausgebildet ist, ist die Ausnehmung 9 im Grundkörper der Reibahle 1 sehr flach. Eine Schwächung der Reibahle wird also auf ein Minimum reduziert. Dadurch kann die hier beschriebene Klemmpratze auch bei Reibahlen vorgesehen werden, mit denen Bohrungen mit sehr kleinen Durchmessern bearbeitet werden sollen.

## Patentansprüche

1. Reibahle mit mindestens einer Messerplatte, die von wenigstens einer eine Öffnung für eine Spannschraube aufweisenden, in einer Ausnehmung im Kopf der Reibahle angeordneten Klemmpratze gehalten wird, **dadurch gekennzeichnet**, daß die Klemmpratze (5) in Draufsicht dreieckförmig ausgebildet ist, daß die Öffnung (23) für die Spannschraube (7) in einer Ecke des Dreiecks angeordnet ist, und daß die von dieser Ecke ausgehenden Seitenflächen der Klemmpratze (5) Führungsflächen (13,15) bilden, die mit Anlageflächen Zusammenwirken, die in der Ausnehmung (9) im Kopf der Reibahle vorgesehen sind, wobei die Anlageflächen in einen bogenförmig, insbesondere kreisbogenförmig ausgebildeten Wandbereich (19) übergehen und der Radius des Wandbereichs (19) kleiner ist als ein bogenförmiger Wandbereich (17) der Klemmpratze (5) in den die Führungsflächen (13,15) übergehen.

2. Reibahle nach Anspruch 1, **dadurch gekennzeichnet**, daß die Führungsflachen (13,15) der Klemmpratze (5) in einen kreisbogenförmig ausgebildeten Wandbereich (17) übergehen.

3. Reibahle nach einem der Ansprüche 1 oder 2, **dadurch gekennzeichnet**, daß die der Messerplatte zugewandte Unterseite (33) der Klemmpratze (5) im wesentlichen als Ebene ausgebildet ist.

4. Reibahle nach Anspruch 3, **dadurch gekennzeichnet**, daß auf der Unterseite (33) der Klemmpratze (5) ein zylindrischer Zapfen (39) konzentrisch zur Öffnung (23) angeordnet ist, der auf seiner Innenseite mit einem Gewinde für die Spannschraube (7) versehen ist.

5. Reibahle nach einem der Ansprüche 1 bis 4, **dadurch gekennzeichnet**, daß die Dicke der Klemmpratze (5) ausgehend von der mit der Öffnung (23) versehenen Ecke in Richtung auf die gegenüberliegende Kante (31) abnimmt.

## Claims

1. A reamer with at least one cutter plate retained by means of at least one clamping lug, which has an opening for a clamping screw and is arranged in a recess in the head of the reamer, **characterised in that** the clamping lug (5) is formed as a triangle when seen in plan view, and the opening (23) for the clamping screw (7) is arranged in an apex of the said triangle, and the side surfaces of the clamping lug (5) extending from the said apex form guide surfaces (13, 15) which cooperate with locating surfaces provided in the recess (9) in the head of the reamer, and the locating surfaces extend into a curved wall region (19) - more particularly a wall region curved in a circular arc - and the radius of the wall region (19) is smaller than a curved wall region (17) of the clamping lug (5) into which the guide surfaces (13, 15) extend.

2. A reamer in accordance with claim 1, **characterised in that** the guide surfaces (13, 15) of the clamping lug (5) extend into a wall region (17) curved in a circular arc.

3. A reamer in accordance with claim 1 or 2, **characterised in that** the lower surface (33) of the clamping lug (5), facing the cutter plate, is formed to be substantially planar.

4. A reamer in accordance with claim 3, **characterised in that** a cylindrical peg (39) is arranged concentrically with the opening (23) on the lower surface (33) of the clamping lug (5), and the said opening is provided on its inner surface with a thread for the clamping screw (7).

5. A reamer in accordance with one of claims 1 to 4, **characterised in that** the thickness of the clamping lug (5), beginning at the apex provided with the opening (23), decreases in the direction of the opposite edge (31).

## Revendications

1. Alésoir équipé d'au moins une plaquette de coupe maintenue par au moins une griffe de serrage montée dans un évidement de la tête de l'alésoir et percée d'une ouverture recevant une vis de serrage, caractérisé en ce que la griffe (5) présente en plan une forme triangulaire, l'ouverture (23) de passage de la vis de serrage (7) est placée dans un coin du triangle, les faces latérales de la griffe (5) entourant ce coin constituent des surfaces de guidage (13, 15) coopérant avec des surfaces d'appui prévues dans l'évidement (9) de la tête de l'alésoir, de manière que ces surfaces d'appui se rejoignent au niveau de la paroi (19) ayant une forme courbe, de préférence selon un arc de cercle et le rayon au niveau de la paroi (1a) est inférieur au niveau de la paroi en forme de courbe (17) de la griffe de serrage (5) par laquelle les surfaces de guidage (13, 15) se rejoignent.

2. Alésoir selon la revendication 1, caractérisé en ce que les surfaces de guidage (13, 15) de la griffe de serrage (5) se rejoignent au niveau de la paroi (17) en arc de cercle.

3. Alésoir selon la revendication 1 ou 2, caractérisé en ce que la face inférieure (33) de la griffe de serrage (5) tournée vers la plaquette de coupe est sensiblement plane.

4. Alésoir selon la revendication 3, caractérisé en ce que la face inférieure (33) de la griffe de serrage (5) porte un téton cylindrique (39) concentrique à l'ouverture (23) et dont la surface interne est munie d'un filetage coopérant avec la vis de serrage (7)

5. Alésoir selon une des revendications 1 à 4, caractérisé en ce que l'épaisseur de la griffe de serrage (5) va en décroissant à partir de l'angle où est percée l'ouverture (23) en direction du côté opposé (31).
